# EUROPÄISCHE PATENTSCHRIFT

(11) **EP 3 475 198 B1**
(45) Veröffentlichungstag und Bekanntmachung des Hinweises auf die Patenterteilung: **21.10.2020**
(21) Anmeldenummer: 17709596.5
(22) Anmeldetag: 21.02.2017
(51) Int. Cl.: B65G 47/08

(54) **VERFAHREN UND VORRICHTUNG ZUM UMGANG MIT IN MINDESTENS EINER REIHE HINTEREINANDER BEWEGTEN STÜCKGÜTERN**
METHOD AND APPARATUS FOR HANDLING PIECE GOODS MOVED ONE AFTER ANOTHER IN AT LEAST ONE ROW
PROCÉDÉ ET DISPOSITIF PERMETTANT LA MANUTENTION DE MARCHANDISES DE DÉTAIL DÉPLACÉES LES UNES DERRIÈRE LES AUTRES EN AU MOINS UNE RANGÉE

(30) Priorität: 23.06.2016 DE 102016211281
(43) Veröffentlichungstag der Anmeldung: 01.05.2019
(73) Patentinhaber: KRONES Aktiengesellschaft, 93073 Neutraubling (DE)
(72) Erfinder: ASTNER, Michael, 93073 Neutraubling (DE); BEER, Erhard, 93073 Neutraubling (DE); KOLLMUSS, Manuel, 93073 Neutraubling (DE); MEHDI, Arsalan, 93073 Neutraubling (DE)
(74) Vertreter: Benninger, Johannes
(86) Internationale Anmeldenummer: PCT/EP2017/053869
(87) Internationale Veröffentlichungsnummer: WO 2017/220214

(56) Entgegenhaltungen:
- WO-A1-2009/019164
- WO-A1-2011/127367
- WO-A1-2017/182217
- WO-A2-2008/022296
- DE-A1-102013 204 095
- FR-A1- 2 993 870

## Beschreibung

Die vorliegende Erfindung betrifft ein Verfahren zum Umgang mit in mindestens einer Reihe hintereinander bewegten Stückgütern mit den Merkmalen des unabhängigen Verfahrensanspruchs 1. Zudem betrifft die Erfindung eine Vorrichtung zum Umgang mit in mindestens einer Reihe hintereinander bewegten Stückgütern mit den Merkmalen des unabhängigen Vorrichtungsanspruchs 11.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

FR2993870 beschreibt ein Verfahren nach dem Oberbegriff des Anspruchs 1.

WO2017182217 ist Teil der Zwischenliteratur und beschreibt keine räumliche Abtrennung eines transportiertes Stückgutes von nachfolgenden Stückgütern einer geschlossenen Formation durch einen Manipulator.

Hauptziel aller bekannten Handhabungssysteme ist es, eine präzise Positionierung von Stückgütern, Paketen, Gebinden und/oder Artikeln für eine möglichst störungsfreie und zuverlässige Lagenbildungs-, Palettierungs- und/oder Verpackungsvorbereitung zu ermöglichen. Ein Nebenziel, das jedoch zunehmend wichtiger wird, besteht darin, hierbei die Taktzeiten zu reduzieren, ohne den bereits erreichten Grad an Präzision zu reduzieren oder Einbußen hinsichtlich der bereits erreichten Zuverlässigkeit in Kauf nehmen zu müssen.

Angesichts des bekannten Standes der Technik kann es als Ziel der vorliegen Erfindung angesehen werden, eine exakte und positionsgenaue Verarbeitung und Handhabung von Stückgütern zu ermöglichen, die in mindestens einer Reihe befördert bzw. transportiert werden. Die Bewegungssteuerung eines Manipulators zur Erfassung der Stückgüter soll exakt auf die Position der angelieferten Stückgüter abstimmbar sein, ohne dass hierzu ein großer Rechen- und/oder Steuerungsaufwand erforderlich sein soll.

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einem Verfahren und einer Vorrichtung zum Umgang mit in mindestens einer Reihe hintereinander bewegten Stückgütern erreicht, welche die Merkmale der unabhängigen Patentansprüche 1 und 11 umfassen. Merkmale vorteilhafter Weiterbildungen der Erfindung ergeben sich aus den jeweiligen abhängigen Ansprüchen.

Die vorliegende Erfindung bezieht sich auf ein Verfahren und eine Vorrichtung bzw. Handhabungsvorrichtung zum Umgang mit in mindestens einer Reihe hintereinander bewegten Stückgütern. Wenn im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit in mindestens einer Reihe hintereinander bewegten Stückgütern gemeint. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit in mindestens einer Reihe hintereinander bewegten Stückgütern gemeint. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in Reihe hintereinander bewegten Stückgüter können dabei je nach Anforderung von nachfolgenden Handhabungsvorrichtungen gleich oder unterschiedlich ausgebildet sein.

Bei dem erfindungsgemäßen Verfahren ist vorgesehen, dass im Erfassungsbereich des Manipulators in mehreren aufeinanderfolgenden Manipulationsschritten jeweils wenigstens ein transportiertes Stückgut durch den wenigstens einen Manipulator aus einer geschlossenen Formation der in einer Reihe hintereinander bewegte Stückgüter klemmend und/oder kraft- und/oder formschlüssig erfasst, von nachfolgenden Stückgütern der geschlossenen Formation räumlich abgetrennt und in eine definierte relative Zielposition und/oder Zielausrichtung gegenüber den jeweils nachfolgenden Stückgütern der Formation gebracht wird. Erfindungsgemäß werden mehrere Stückgüter durch jeweils aufeinanderfolgende Manipulationsschritte in jeweils unterschiedliche Zielpositionen und/oder Zielausrichtungen gebracht, wodurch jeweils Vorgruppierungen und/oder Lagenanordnungen für stapelbare Stückgutlagen mit jeweils einer definierten Anzahl von Stückgütern ausgebildet werden.

Weiterhin ist erfindungsgemäß vorgesehen, dass die zum Erfassungsbereich transportierte geschlossene Formation der in einer Reihe hintereinander bewegten Stückgüter jeweils mit Lücken zwischen aufeinanderfolgenden Gruppen einer definierten Anzahl von Stückgütern beaufschlagt werden. Erfindungsgemäß werden die Lücken jeweils nach einer definierten Anzahl von Stückgütern einer von der nachfolgenden geschlossenen Formation beabstandeten Gruppe gebildet, wobei die Anzahl der Stückgüter in der Gruppe insbesondere mit der Anzahl von Stückgütern einer zu bildenden Vorgruppierung und/oder Lagenanordnung korrespondieren kann. Die Anzahl der Stückgüter in der Gruppe kann erfindungsgemäß jedoch auch mit einem Vielfachen der Anzahl von Stückgütern für eine zu bildende Vorgruppierung und/oder Lagenanordnung korrespondieren.

In diesem Zusammenhang kann auch von einer getakteten Formation gesprochen werden, die insbesondere eine weitgehend regelmäßige Aufeinanderfolge von definierten Gruppen von Stückgütern beschreibt, die in einer Reihe hintereinander mit jeweils einer definierten Anzahl von Stückgüter und dementsprechend einer definierten Länge transportiert werden, wobei zwischen aufeinander folgenden Gruppen definierte Lücken ausgebildet werden, was den Begriff der Taktung des Zulaufs bzw. der Taktung der Formationen meint. Innerhalb der Gruppen werden die aufeinanderfolgenden Stückgüter lückenlos transportiert.

Der beschriebene Verfahrensschritt bzw. die zuvor beschriebenen Verfahrensschritte oder auch einzelne der zuvor beschriebenen Verfahrensschritte erfolgen insbesondere mittels einer erfindungsgemäßen Vorrichtung, insbesondere mittels einer Handhabungsvorrichtung, die dem Umgang mit in mindestens einer Reihe von hintereinander bewegten Stückgütern dient/dienen, welche Vorrichtung wenigstens eine (erste) Transporteinrichtung und mindestens einen Manipulator umfasst. Die wenigstens eine (erste) Transporteinrichtung dient der Zuführung der in einer Reihe zueinander unmittelbar aufeinanderfolgenden, insbesondere annähernd ohne Beabstandung als geschlossene Formation angeordneten bzw. bewegten, Stückgüter in Richtung eines Erfassungsbereichs des mindestens einen Manipulators. Bei der (ersten) Transporteinrichtung handelt es sich beispielsweise um einen Horizontalförderer, insbesondere ein Horizontalförderband.

Erfindungsgemäß wird die wenigstens eine (erste) Transporteinrichtung zur Ausbildung von Lücken zwischen Gruppen aufeinanderfolgender Stückgüter und/oder zu deren Distanzierung von der nachfolgenden geschlossenen Formation mit variabler, insbesondere mit zumindest kurzzeitig gegenüber einer regulären Fördergeschwindigkeit beschleunigter Transportgeschwindigkeit betrieben.

Von der (ersten) Transporteinrichtung gelangen die Stückgüter auf eine weitere, insbesondere fluchtende Horizontalfördereinrichtung, auf welcher sie durch den Manipulator der Handhabungsvorrichtung innerhalb seines Erfassungsbereiches erfasst und insbesondere auch freigegeben werden. Die Horizontalfördereinrichtung und der Manipulator bilden insbesondere das Gruppiermodul der Handhabungsvorrichtung mit dem Erfassungsbereich, in dem die jeweiligen Stückgüter durch den Manipulator erfasst und insbesondere auch freigegeben werden. Gemäß einer Ausführungsform der Erfindung kann vorgesehen sein, dass vor der ersten Transporteinrichtung und der Horizontalfördereinrichtung des Gruppiermoduls eine weitere, zweite Transporteinrichtung angeordnet ist. Hierbei kann beispielsweise vorgesehen sein, dass die zwischen der zweiten Transporteinrichtung und der Horizontalfördereinrichtung des Gruppiermoduls angeordnete erste Transporteinrichtung eine derartige Länge aufweist, dass eine komplette Gruppe mit einer definierten Anzahl von Stückgütern gemäß der zu bildenden Vorgruppierung und/oder Lagenanordnung auf der ersten Transporteinrichtung angeordnet werden kann.

Der mindestens eine Manipulator der Handhabungsvorrichtung ist typischerweise bzw. vorzugsweise zum klemmenden und/oder formschlüssigen und/oder kraftschlüssigen Erfassen und/oder Entgegennehmen von jeweils mindestens einem Stückgut aus der mittels der wenigstens einen Transporteinrichtung in den Erfassungsbereich des Manipulators transportieren und von der geschlossenen Formation distanzierten bzw. durch eine Lücke beabstandeten Gruppe von Stückgütern ausgebildet. Weiterhin ist der Manipulator zum Abtrennen und selektiven Überführen des wenigstens einen erfassten Stückgutes in eine Zielposition und/oder Zielausrichtung ausgebildet. Dabei werden durch den Manipulator jeweils Vorgruppierungen und/oder Lagenanordnungen für stapelbare Stückgutlagen mit jeweils einer definierten Anzahl von Stückgütern ausgebildet, wobei die definierte Anzahl von Stückgütern jeder von der Formation beabstandeten Gruppe mit der definierten Anzahl von Stückgütern jeder zu bildenden Vorgruppierung und/oder Lagenanordnung korrespondiert.

Das klemmende Erfassen der mindestens zwei Stückgüter erfolgt vorzugsweise mittels Klemm- und/oder Greifmitteln des wenigstens eines Manipulators. Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein.

Gemäß einer Ausführungsvariante des erfindungsgemäßen Verfahrens können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter parallel zur Transportrichtung der zulaufenden Stückgüter ausgerichtet.

Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Deltakinematik-Roboter, Parallelkinematik- Roboter bzw. sog. Tripode ausgebildet sind, um die Manipulationsschritte zur Erfassung und Positionierung der Stückgüter innerhalb des Gruppiermoduls entsprechend durchzuführen.

Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Gemäß einer bevorzugten Ausführungsform der Erfindung ist vorgesehen, dass die Lagekoordinaten jeder Lücke in Bezug zur Transportrichtung der Stückgüter zwischen in Transportrichtung zum Erfassungsbereich transportierten in Reihe angeordneten aufeinanderfolgenden Gruppen von Stückgütern sensorisch erfasst und einer Steuer- und/oder Auswerteeinheit als Positionswert zur Verfügung gestellt werden. Insbesondere ist hierfür dem Erfassungsbereich des Gruppiermoduls der Handhabungsvorrichtung und/oder der ersten Transporteinrichtung und/oder der zweiten vorgeordneten Transporteinrichtung wenigstens eine Sensoreinrichtung zur Erfassung der Lagekoordinaten jeder Lücke und zur Generierung eines Positionswertes für die Steuer- und/oder Auswerteeinheit zugeordnet.

Die Steuerung des Manipulators und weiterer Maschinenbauteile der Vorrichtung erfolgt vorzugsweise über eine Steuer- und/oder Auswerteeinheit der Vorrichtung oder Handhabungsvorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Bei der Steuer- und/oder Auswerteeinheit kann es sich insbesondere um eine elektronische und/oder programmierbare Steuer- und/oder Auswerteeinheit wie beispielsweise eine SPS handeln. In dieser können unterschiedliche Rezepte / Daten abgelegt sein, mit welchen jeweils unterschiedliche Stückgüter - beispielsweise Sechser-Gebinde und Vierer- Gebinde - geklemmt, freigegeben und/oder realisiert werden können. Die Steuer- und/oder Auswerteeinheit kann insbesondere folgende Rezepte / Daten enthalten:
- unterschiedliche Zielpositionen und/oder Zielausrichtungen, insbesondere ob die Stückgüter mit Rotation oder ohne Rotation in die Zielpositionen und/oder Zielausrichtungen gelangen und/oder
- Informationen zum Ziel- Lagenschema, d.h. Anordnung der Stückgüter in Relation zueinander in der jeweiligen Ziellage und/oder
- Anzahl der Formationen im Zulauf der Vorrichtung, insbesondere einreihiger oder mehrreihiger Zulauf von Stückgütern etc.

Insbesondere ist vorgesehen, dass die Bewegungssteuerung des wenigstens einen Manipulators im Erfassungsbereich zur Erfassung des wenigstens einen Stückgutes und zu seiner räumlichen Abtrennung von der der geschlossenen Formation durch die Lücke beabstandeten, vorauseilenden Gruppe an Stückgütern auf Grundlage der von der Steuer- und/oder Auswerteeinheit gelieferten Koordinaten- und/oder Positionswerte für das jeweils zuvorderst befindliche Stückgut der Gruppe an Stückgütern, insbesondere aufgrund der sensorisch erfassten Vorderkante des jeweils zuvorderst befindlichen Stückgutes der Gruppe erfolgt.

Dies ist vorzugsweise im Rahmen einer Echtzeitkorrektur möglich, d.h., die Position des Manipulators wird jeweils anhand der Koordinaten- und/oder Positionswerte des zuvorderst ankommenden zu greifenden Stückgutes der Gruppe berechnet und angepasst. Sollen weiter hinten in der Gruppe einlaufende Stückgüter gegriffen werden, so dass durch Verschieben der gegriffenen Stückgüter in Flucht zur Transportrichtung der Gruppe diese sowie alle vor den gegriffenen Stückgütern befindlichen Stückgütern gemeinsam verschoben werden, so kann die Position des zuvorderst befindlichen Stückgutes, auch wenn dieses nicht gegriffen wird, ebenfalls zur Echtzeitkorrektur der Position des Manipulators verwendet werden.

Gemäß einer alternativen Ausführungsform werden die ermittelten Daten für die Korrektur beim Abgreifen der Stückgüter nicht direkt im anschließenden Verfahrensschritt verwendet, sondern erst in einem später folgenden Verfahrensschritt. Dies kann notwendig sein, wenn die Steuer- und/oder Auswerteeinheit bereits das Bewegungsprofil des Manipulators für den direkt nachfolgenden Verfahrensschritt berechnet hat.

Insbesondere werden die Raumkoordinaten und/oder Positionen der in Transportrichtung jeweils zuvorderst befindlichen Stückgüter der zum Erfassungsbereich transportierten, der geschlossenen Formation durch die Lücke beabstandet vorauseilenden Gruppe an Stückgütern und/oder die jeweiligen Raumkoordinaten und/oder Positionen der Vorderkanten der zum Erfassungsbereich transportierten Gruppe an Stückgütern permanent und/oder in zyklischer Folge und/oder in unregelmäßiger Folge erfasst und der Steuer- und/oder Auswerteeinheit als Positionswerte zur Verfügung gestellt, um den Manipulator bzw. dessen Bewegungsprofil und/ oder Bewegungssteuerungen entsprechend zu kalibrieren. Damit können insbesondere Abstände zwischen den Stückgütern innerhalb einer von der Formation abgetrennten Gruppe ausgeglichen werden und sichergestellt werden, dass der Manipulator die abzugreifenden Stückgüter immer optimal erfasst.

Gemäß einer Ausführungsform der Erfindung erfolgt eine Kalibrierung der Bewegungssteuerung des wenigstens einen Manipulators bei oder nach jeder erneuten Bildung der Vorgruppierung und/oder Lagenanordnung auf Grundlage der von der Steuer- und/oder Auswerteeinheit gelieferten Koordinaten- und/oder Positionswerte für das jeweils zuvorderst befindliche Stückgut der von der geschlossenen Formation distanzierten Gruppe an Stückgütern und/oder dessen Vorderkante.

Vorzugsweise wird zumindest ein Abschnitt des Erfassungsbereiches und/oder eines Bewegungsraumes des wenigstens einen Manipulators mittels wenigstens einer Sensoreinrichtung zur Gewinnung von Raumkoordinaten und/oder Positions- und/oder Umrissdaten des wenigstens einen in Transportrichtung zuvorderst transportierten Stückgutes der von der geschlossenen Formation abgetrennten Gruppe erfasst und überwacht. Dabei können beispielsweise die Lagekoordinaten und/oder Positionen der Lücken zwischen aufeinanderfolgenden Gruppen an Stückgütern und/oder zwischen einer von der geschlossenen Formation distanzierten Gruppe und der nachfolgenden geschlossenen Formation sensorisch erfasst werden, insbesondere mittels wenigstens einer optischen Sensoreinrichtung. Die optische Sensoreinrichtung kann beispielsweise als eine Lichtschranke mit einem in etwa quer zur Transportrichtung verlaufenden Sensorlichtstrahl ausgebildet sein, aus deren Daten die Steuer- und/oder Auswerteeinheit Raumkoordinaten und/oder Positionswerte für das jeweils zuvorderst befindliche Stückgut der von der geschlossenen Formation distanzierten Gruppe und/oder der nach vorne weisender Umrisskante bzw. Vorderkante des jeweils zuvorderst befindlichen Stückgutes der von der geschlossenen Formation distanzierten Gruppe gewinnt.

Gemäß einer alternativen Ausführungsform kann die wenigstens eine Sensoreinrichtung durch mindestens eine Kamera mit nachgeschalteter Bildauswertung gebildet sein, aus deren Daten die Steuer- und/oder Auswerteeinheit Raumkoordinaten und/oder Positionswerte für das jeweils zuvorderst befindliche Stückgut der geschlossenen Formation und/oder dessen nach vorne weisender Umrisskante bzw. Vorderkante gewinnt.

Der Vorteil des erfindungsgemäßen Verfahrens und der Vorrichtung besteht darin, dass der Manipulator anhand der Position des zuvorderst angeordneten Stückguts einer von den Formation abzutrennenden oder abgetrennten Gruppe mit einer definierten Stückgutanzahl entsprechend der zu bildenden Lage kalibriert wird. Somit kann die Größe der Lücke zwischen der abgetrennten Gruppe und der nachfolgenden Formation variieren, ohne dadurch Fehler durch einen vorberechneten Bewegungsablauf des Manipulators zu erzeugen. In Zusammenschau mit weiteren bekannten Prozessdaten, beispielsweise der Transportgeschwindigkeit der Formation auf der (zweiten) Transporteinrichtung, der Transportgeschwindigkeit der Stückgüter der von der Formation abgetrennten, einlaufenden Gruppe auf der (ersten) Transporteinrichtung und / oder auf der Horizontalfördereinrichtung usw. wird das Bewegungsprofil des Manipulators zum Abgreifen der die nächste Palettenlage bildenden Stückgüter der nachlaufenden Gruppe ermittelt. Dies ist mit geringem technischen Aufwand realisierbar, insbesondere sind relativ einfache technische Mittel ausreichend, da als Sensorik beispielsweise nur eine Lichtschranke pro zuführende Transportbahn eingesetzt werden muss, um den Manipulator immer wieder für jede Palettenlage neu zu kalibrieren und somit kleinere Abweichungen durch Abstände zwischen den Stückgütern innerhalb einer lückenlosen Gruppe und/oder Formation zeitnah ausgleichen zu können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Draufsicht eine erste Phase im zeitlichen Ablauf einer Ausführungsvariante eines erfindungsgemäßen Verfahrens zum Umgang mit hintereinander bewegten Stückgütern durch eine entsprechende Handhabungsvorrichtung.
Fig. 2 zeigt in einer schematischen Draufsicht eine der ersten Phase zeitlich folgende zweite Phase des erfindungsgemäßen Verfahrens zum Umgang mit hintereinander bewegten Stückgütern.
Fig. 3 zeigt in einer schematischen Draufsicht eine der zweiten Phase zeitlich folgende dritte Phase des erfindungsgemäßen Verfahrens zum Umgang mit hintereinander bewegten Stückgütern.
Fig. 4 zeigt in einer schematischen Draufsicht eine der dritten Phase zeitlich folgende vierte Phase des erfindungsgemäßen Verfahrens zum Umgang mit hintereinander bewegten Stückgütern.
Fig. 5 zeigt in einer schematischen Draufsicht eine der vierten Phase zeitlich folgende fünfte Phase des erfindungsgemäßen Verfahrens zum Umgang mit hintereinander bewegten Stückgütern.

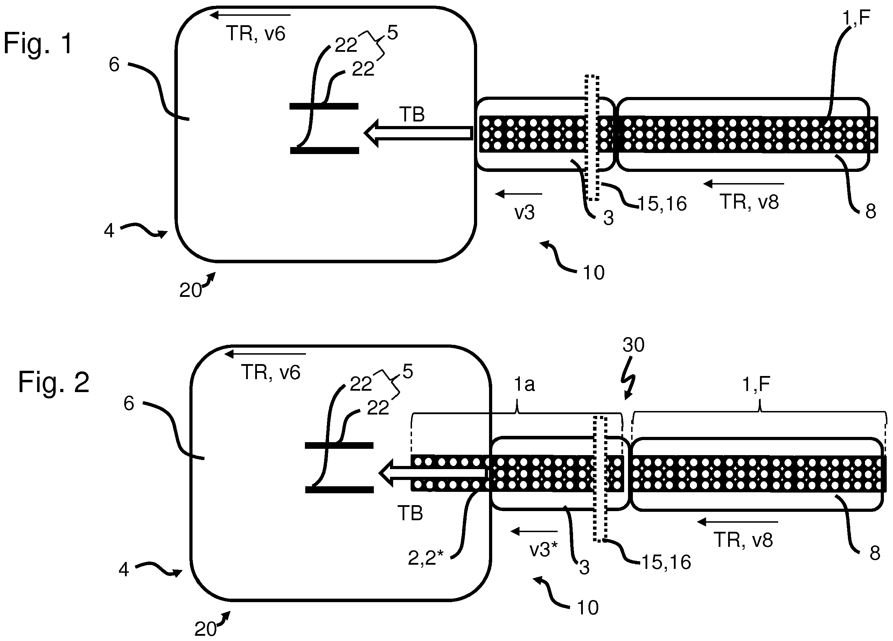

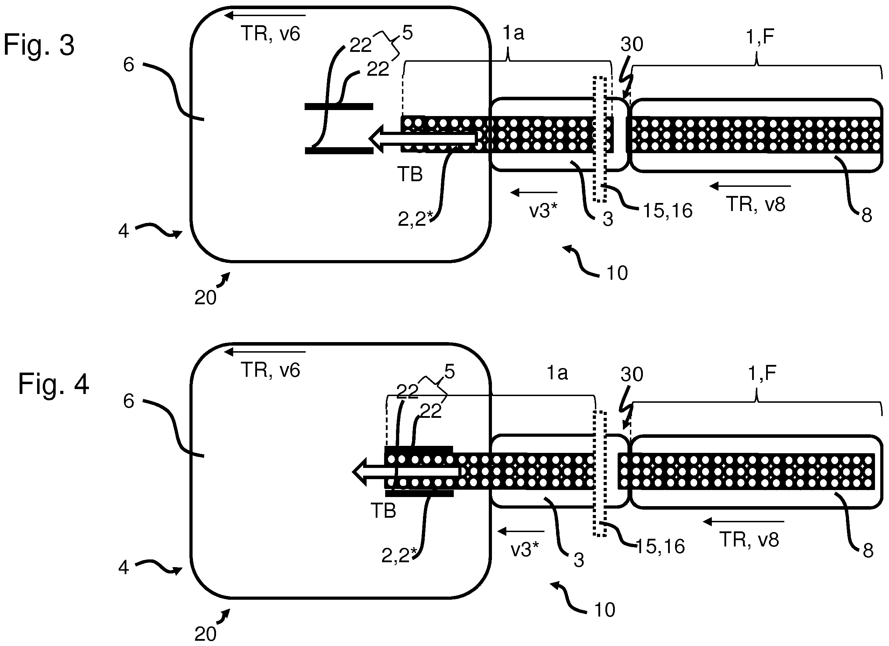

Für gleiche oder gleich wirkende Elemente der Erfindung werden in den Figuren 1 bis 5 jeweils gleiche Bezugsziffern verwendet. Ferner werden der Übersicht halber nur solche Bezugsziffern in den einzelnen Figuren verwendet, die für die Beschreibung der jeweiligen Figur erforderlich sind. Die zeichnerisch dargestellten Ausführungsformen stellen lediglich Beispiele dar, wie die erfindungsgemäße Vorrichtung und das erfindungsgemäße Verfahren ausgestaltet sein können und stellen keine abschließende Begrenzung der Erfindung bzw. der erfinderischen Gedanken dar.

Die Figuren 1 bis 5 zeigen jeweils in schematischen Draufsichten den zeitlichen Ablauf einer Ausführungsvariante eines erfindungsgemäßen Verfahrens zum Umgang hintereinander bewegten Stückgütern durch eine entsprechende Handhabungsvorrichtung. Anhand des nachfolgend beschriebenen Verfahrens wird verdeutlicht, wie bei der lückenlosen Zuführung von hintereinander bewegten Stückgütern 2 kleine oder kleinste Lücken bzw. Abstände zwischen den Stückgütern 2 auftreten können. Diese Lücken bzw. Abstände können bspw. durch Relativbewegungen der Stückgüter 2 zueinander und/oder durch Maßabweichungen der einzelnen Stückgüter 2 auftreten. Beim Auftreten solcher Lücken bzw. Abstände kann es dazu kommen, dass die Aufnahmeposition des nachfolgend beschriebenen Manipulators 5 oder Greifers, der in einem Erfassungsbereich 4 agiert, nicht mehr korrekt ist. Summieren sich solche Positionierungsfehler des Manipulators 5 bezüglich der zu erfassenden Stückgüter 2 über eine Mehrzahl von zeitlich nacheinander erfassten Stückgütern 2 oder Gruppen von Stückgütern 2 auf, kann dies zu einer Fehlfunktion einer Handhabungsvorrichtung 10 führen, insbesondere durch fehlerhaftes Abgreifen der Stückgüter 2 bzw. durch nicht ordnungsgemäße oder zielgenauer Erfassung der Stückgüter 2. Vorzugsweise wird deshalb jeweils nach einer definierten Anzahl an Stückgütern 2, die der Manipulator 5 beispielsweise zwischen Klemmbacken 22 erfasst und anschließend positioniert und die gemeinsam eine Lage bilden, ein Abstand bzw. eine definierte Lücke 30 zwischen aufeinander folgenden Gruppen 1a von Stückgütern 2 erzeugt bzw. es wird eine definierte Lücke 30 zwischen einer Gruppe 1a von Stückgütern 2 und den in Formation F bzw. Reihe 1 nachlaufenden Stückgütern 2 erzeugt.

Im Zulauf vor einem nachfolgend näher beschriebenen Gruppiermodul 20 der Handhabungsvorrichtung 10 werden die Stückgüter 2 zunächst lückenlos in einer Reihe 1 oder Formation F nacheinander heran transportiert. Bereits auf dem Zuführband wird nach einer Anzahl von Stückgütern 2, die notwendig ist um eine Lage zu bilden, eine definierte Lücke 30 generiert. Beispielsweise kann nach etwa zwanzig Stückgütern 2 eine Lücke 30 von etwa 100 mm oder einem anderen sinnvollen Maß erzeugt werden. Daran anschließend werden wiederum zwanzig weitere Stückgüter 2 lückenlos ins Gruppiermodul 20 befördert. Dies bezeichnet man auch als getakteten Zulauf. Der Zulauf der Stückgüter zu dem Gruppiermodul erfolgt insbesondere über eine erste Transporteinrichtung 3, vor der eine weitere zweite Transporteinrichtung 8 angeordnet ist, insbesondere ist die Transporteinrichtung 3 in einer Flucht zwischen der zweiten Transporteinrichtung 8 und einer Horizontalfördereinrichtung 6 des Gruppiermoduls 20 angeordnet.

Die schematische Darstellung der Fig. 1 zeigt insbesondere das Einlaufen der Stückgüter 2 als Reihe 1 bzw. in im Wesentlichen lückenloser Formation F über die erste und zweite Transporteinrichtung 3, 8 der Handhabungsvorrichtung 10. Bei den Stückgütern 2 handelt es sich im dargestellten Ausführungsbeispiel bspw. jeweils um Gebinde aus sechs Getränkebehältern, die beispielsweise mit einer Schrumpfverpackung zusammen gehalten werden. Bei den Stückgütern 2 kann es sich aber auch um jegliche andere Pakete, Gebinde, Kästen etc. handeln, bspw. sog. Tray-Gebinde, Dosengebinde etc.

Der erste Transporteinrichtung 3 der Handhabungsvorrichtung 10 ist insbesondere zwischen der zweiten Transporteinrichtung 8 und Horizontalfördereinrichtung 6 des Gruppiermoduls 20 angeordnet. Insbesondere kann die erste Transporteinrichtung 3 einen verhältnismäßig kurzen Transportabschnitt ausbilden. Die beiden in Transportrichtung TR hintereinander und in einer Flucht angeordneten Transporteinrichtungen 3 und 8 dienen insbesondere der Ausbildung von definierten Lücken 30 innerhalb der Reihe 1 von lückenlos zur Handhabungseinrichtung 10 geförderten Stückgütern 2 gemäß Figuren 2 bis 4.

So zeigt die Fig. 1 insbesondere das Einlaufen der Stückgüter 2 als unendliche Reihe 1 bzw. Formation F von Stückgütern 2 über die Transporteinrichtung 8 der Handhabungsvorrichtung 10. Die Stückgüter 2 werden auf der Transporteinrichtung 8 zunächst in Transportrichtung TR mit einer vorzugsweise konstanten Transportgeschwindigkeit v8 in Richtung zu der sich unmittelbar an die Transporteinrichtung 8 anschließenden kürzeren Transporteinrichtung 3 befördert. Dort werden die Stückgüter 2 mit einer mit der konstanten Transportgeschwindigkeit v8 übereinstimmenden oder kurzzeitig von dieser abweichenden Transportgeschwindigkeit v3 befördert. Die Transportgeschwindigkeit v3 entspricht im Wesentlichen der Transportgeschwindigkeit v8. Nachdem eine definierte Anzahl von Stückgütern 2, die der Anzahl der Stückgüter 2 einer Palettenlage o.ä. entspricht, auf die Transporteinrichtung 3 und gegebenenfalls bereits weiter auf eine Horizontalfördereinrichtung 6 der Handhabungsvorrichtung 10 überführt wurde, wird durch eine kurzzeitige Erhöhung der Transportgeschwindigkeit der Transporteinrichtung 3 auf eine erhöhte Transportgeschwindigkeit v3* eine Lücke 30 definierter Länge zwischen den bereits auf die Transporteinrichtung 3 überführten Stückgütern 2 und den auf der Transporteinrichtung 8 nachlaufenden Stückgütern 2 der endlos einlaufenden Formation F gebildet, wie dies insbesondere in den Figuren 2 bis 4 deutlich zu erkennen ist. Anschließend wird die Geschwindigkeit der Transporteinrichtung 3 wieder auf die ursprüngliche Transportgeschwindigkeit v3 reduziert, so dass die Geschwindigkeit der innerhalb der vorauseilenden Gruppe 1a angeordneten Stückgüter wieder mit der Geschwindigkeit der nachlaufenden Stückgüter 2 der Formation F übereinstimmt.

Während die auf der ersten Transporteinrichtung 3 angeordneten Stückgüter 2 mit erhöhter Transportgeschwindigkeit v3* befördert werden, laufen die nachfolgenden Stückgüter 2 der Formation mit unveränderter Geschwindigkeit v8 auf der zweiten Transporteinrichtung 8 weiter in Richtung der ersten Transporteinrichtung 3. Insbesondere ist die Zeiteinheit, in der die erste Transporteinrichtung 3 eine erhöhte Transportgeschwindigkeit v3* aufweist, derart kurz, dass keine Lücken zwischen nachlaufenden Stückgütern 2 der Formation F erzeugt werden.

Die auf der Transporteinrichtung 3 angeordneten Stückgüter 2 mit erhöhter Transportgeschwindigkeit v3* schieben die vorauseilenden Stückgüter 2 dieser Gruppe 1a an, so dass die bereits auf der Horizontalfördereinrichtung 6 angeordneten Stückgüter 2 ebenfalls eine gegenüber der Geschwindigkeit v6 der Horizontalfördereinrichtung erhöhte Geschwindigkeit v3* aufweisen. Dies bewirkt zudem eine Aufstauung der Stückgüter 2 innerhalb der Gruppe 1a und führt insbesondere zu einer optimalen Verdichtung der Stückgüter 2 innerhalb der Gruppe 1a.

Alternativ könnte die Lücke 30 zwischen der vorauseilende Gruppe 1a mit einer definierten Anzahl an Stückgütern 2 und den nachlaufenden Stückergütern 2 der Formation F durch eine kurzzeitige Verringerung der Transportgeschwindigkeit der Transporteinrichtung 8 auf eine reduzierte Transportgeschwindigkeit oder durch ein kurzzeitiges Anhalten der Transporteinrichtung 8erzeugt werden. Da hierbei jedoch unter Umständen ein rückwärtiges Aufstauen weiter entfernter Stückgüter 2 auf der Transporteinrichtung 8 notwendig sein kann, sind bei einer solchen Variante der Lückenbildung ggf. weitere Maßnahmen zu treffen, um die Positionierungsgenauigkeit des Manipulators 5 in Bezug auf die aufzunehmenden Stückgüter 2 nicht beeinträchtigt wird.

Die im Anschluss an die Lückenbildung auf der Transporteinrichtung 3 mit einer vorzugsweise konstanten Transportgeschwindigkeit v3 weitergeführten Stückgüter 2 der derart gebildeten Gruppe 1a werden in Richtung eines Erfassungsbereiches 4 eines beweg-, verschieb- und/oder rotierbaren Manipulators 5 der Handhabungsvorrichtung 10 bewegt und lückenlos von der Transporteinrichtung 3 an eine Horizontalfördereinrichtung 6 übergeben und auf dieser mit einer konstanten Geschwindigkeit v6 weitergeführt, die insbesondere der Transportgeschwindigkeit v3 der Transporteinrichtung 3 entspricht.

Sowohl die Transporteinrichtung 8 als auch die Transporteinrichtung 3 sind beispielsweise jeweils durch endlos umlaufende Förderbänder, Mattenketten oder andere geeignete Fördereinrichtungen gebildet, auf denen die Stückgüter 2 vorzugsweise einreihig transportiert werden, wobei zwischen jeweils direkt aufeinander folgenden Stückgütern 2 innerhalb ihrer jeweiligen Reihe 1 bzw. Gruppe 1a keine bzw. nur eine geringfügige, gegebenenfalls prozessbedingte, Abstände bestehen. Die Stückgüter 2 laufen somit als Gruppe 1a mit einer jeweils definierten Anzahl von Stückgütern 2 in den Erfassungsbereich 4 des beweg-, verschieb- und/oder rotierbaren Manipulators 5 ein, der die Stückgüter 2 im Erfassungsbereich 4 in gewünschter Weise positioniert, um aus mehreren Stückgütern 2 bspw. flächige und insbesondere palettierfähige Lagenanordnungen zu bilden.

Weiterhin ist möglich, dass die Stückgüter 2 mehrreihig, insbesondere in mehreren Parallelreihen zum Erfassungsbereich 4 des Manipulators 5 hin transportiert werden. Die Parallelreihen können dabei beabstandet zueinander oder weitgehend ohne Abstand zueinander auf der Transporteinrichtung 3 oder auf mehreren parallelen Transporteinrichtungen 3 transportiert werden (nicht dargestellt).

Weiterhin ist in Fig. 1 die Bewegungsbahn TB der als Gruppe 1a ankommenden Stückgüter 2 auf der Horizontalfördereinrichtung 6 durch einen Pfeil angedeutet. Diese Bewegungsbahn TR befindet sich in einer Flucht zur Bewegungsrichtung der Stückgüter 2 der Gruppe 1a, der Reihe 1 bzw. der Formation F auf den Transporteinrichtungen 3 und 8.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet. Die Stückgüter 2 werden insbesondere mit Lücken 30 definierter Länge zwischen aufeinander folgenden Gruppen 1a der in Formation F bzw. endloser Reihe 1 lückenlos herangeführter Stückgüter 2 und damit in definierter Taktung von der sich an die Transporteinrichtung 8 anschließenden Transporteinrichtung 3 in das Gruppiermodul 20 überführt und durch die Horizontalfördereinrichtung 6 konstant mit einer Fördergeschwindigkeit v6 in die Transportrichtung TR weiter bewegt. Die Fördergeschwindigkeit v6 der Horizontalfördereinrichtung 6 entspricht hierbei vorzugsweise der Transportgeschwindigkeit v3 der Transporteinrichtung 3.

Der Manipulator 5, welcher oberhalb der Horizontalfördereinrichtung 6 im Gruppiermodul 20 angeordnet ist, ist zum klemmenden und/oder kraft- und/oder formschlüssigen Entgegennehmen von Stückgütern 2 innerhalb des Erfassungsbereichs 4 ausgebildet. Der Manipulator 5 kann bspw. durch einen an sich bekannten Parallelkinematik-Roboter, durch einen Portalroboter oder durch einen Mehrachsroboter gebildet sein, der die gewünschten schnellen Stellbewegungen im Raum mit der gewünschten Positioniergenauigkeit durchführen kann.

Die vom Manipulator 5 erfassten Stückgüter 2 werden nachfolgend zur Unterscheidung von den in den Reihen 1 bzw. Gruppen 1a angeordneten Stückgütern 2 mit der Bezugsziffer 2* bezeichnet. So kann der Manipulator 5 in mehreren zeitlich aufeinanderfolgenden Schritten bspw. mindestens ein Stückgut greifen. Wahlweise kann er jedoch auch zwei oder drei nacheinander angeordnete der in der Gruppe 1a und mit konstanter Transportgeschwindigkeit v3 einlaufenden Stückgüter 2, 2* greifen, trennt diese von der Gruppe 1a der Stückgüter 2 ab und überführt das abgetrennte Stückgut 2* bzw. die abgetrennte Gruppierung von zwei oder drei lückenlos in Reihe angeordneten Stückgütern 2* in eine Zielposition P und/oder Zielausrichtung innerhalb des Erfassungsbereichs 4. Dabei kann vorgesehen sein, dass das Stückgut 2* bzw. die Gruppierung von Stückgütern 2* seitlich gegenüber der einlaufenden Gruppe 1a mit weiteren Stückgütern 2 verschoben wird und/oder dass das erfasste Stückgut 2* bzw. die erfasste Gruppierung von Stückgütern 2* durch den Manipulator 5 in Transportrichtung TR von der nachrückenden Gruppe 1a der Stückgüter 2 beabstandet wird. Zusätzlich kann bei dem erfindungsgemäßen Verfahren vorgesehen sein, dass das Stückgut 2* bzw. die Gruppierung von Stückgütern 2* gegenüber den Stückgütern 2 der Gruppe 1a verdreht wird. Ob die Stückgüter 2* bei diesen Positionierungsvorgängen von der Horizontalfördereinrichtung 6 abgehoben werden oder auf dieser gleiten, ist für die vorliegende Erfindung ohne weiteren Belang.

Während der Positionierung der vom Manipulator 5 erfassten Stückgüter 2* werden die Transporteinrichtung 8, die Transporteinrichtung 3 und die Horizontalfördereinrichtung 6 weiterhin konstant, d.h. mit konstanten Vorschubbewegungen für die Stückgüter 2 betrieben. Insbesondere werden die Stückgüter 2 der Gruppe 1a bzw. der nachlaufende Reihe 1 sowie die bereits in der Zielposition P angeordneten Stückgüter 2* unterbrechungsfrei und/oder mit unveränderter Transportgeschwindigkeit v3 auf der Transporteinrichtung 3 bzw. mit unveränderter Geschwindigkeit v6 auf der Horizontalfördereinrichtung 6 weiter transportiert.

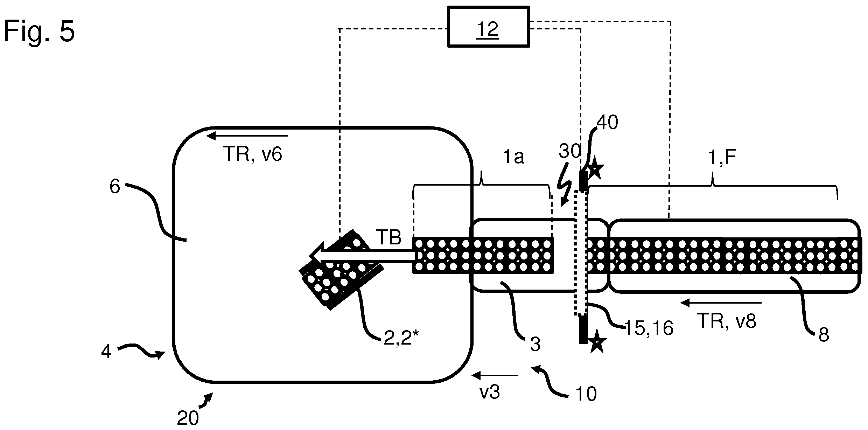

Der die Stückgüter 2, 2* innerhalb des Erfassungsbereichs 4 positionierende Manipulator 5 besitzt vorzugsweise eine bestimmte Aufnahmekapazität für mehrere Stückgüter 2, 2*. Jedoch ist außerdem vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Gruppe 1a definierter Länge erfasst. Dies wird insbesondere über eine Steuereinrichtung 12 (vgl. Figur 5) kontrolliert und/oder geregelt. Die Anzahl der erfassten Stückgüter 2 bzw. 2* variiert hierbei zwischen eins und der maximalen Anzahl gemäß der Aufnahmekapazität des Manipulators 5.

In dem in Fig. 5 dargestellten Verfahrensschritt wird eine Gruppe von drei durch den Manipulator 5 gegriffenen Stückgütern 2, 2* auf eine Zielposition (nicht dargestellt) links von einer Flucht der Transporteinrichtung 3 befördert und dabei gedreht. Die nicht durch den Manipulator 5 erfassten Stückgüter 2 der Gruppe 1a werden im Erfassungsbereich 4 des Manipulators 5 ohne Unterbrechung und mit unveränderter Geschwindigkeit v6 weitertransportiert, so dass sie in einem zeitlich unmittelbar nachfolgenden Erfassungsschritt erfasst und auf eine weitere Zielposition (nicht gezeigt) positioniert werden können. Hierbei kann vorgesehen sein, dass der Manipulator 5 die drei erfassten Stückgüter 2* beispielsweise anhebt, zur Zielposition befördert und auf der Horizontalfördereinrichtung 6 innerhalb des Erfassungsbereiches 4 wieder absetzt. Alternativ kann vorgesehen sein, dass der Manipulator 5 die drei erfassten Stückgüter 2* auf der Horizontalfördereinrichtung 6 verschiebt, indem er insbesondere eine Geschwindigkeitskomponente und/oder eine Richtungskomponente auf die abgegriffenen Stückgüter 2* aufbringt.

Vorzugsweise werden die drei erfassten Stückgüter 2* hierbei in einem einzigen, insbesondere unterbrechungsfreien, Manipulationsschritt in die Zielposition und/oder Zielausrichtung überführt, geschoben und dabei entsprechend gedreht. Insbesondere werden die drei erfassten Stückgüter 2* in eine Zielposition gebracht, so dass die in mehreren zeitlich aufeinander folgenden Verfahrensschritten manipulierten und in jeweilige Zielpositionen gebrachten Stückgüter 2* eine palettierfähige Lage oder eine Vorgruppierung für eine palettierfähige Lage bilden.

Bei den hier beschriebenen Manipulationsschritten ist insbesondere vorgesehen, dass sich der Manipulator 5 zumindest beim Erfassen der Stückgüter 2* und bei deren Freigabe in der Zielposition und/oder Zielausrichtung mit einer Geschwindigkeit bewegt, die annähernd bzw. exakt der Transportgeschwindigkeit v3 entspricht, mit der sich die geschlossene Formation F der Stückgüter 2 bewegt bzw. die der Geschwindigkeit v6 entspricht, mit der sich die Horizontalfördereinrichtung 6bewegt.

Nachdem die Stückgüter 2* ihre jeweilige Zielposition (nicht dargestellt) erreicht haben und sich der Manipulator 5 jeweils von den Stückgütern 2* gelöst hat, werden die Stückgüter 2* in Transportrichtung TR und in Geschwindigkeit v6 auf der Horizontalfördereinrichtung 6 weiterbewegt. Die jeweilige Zielposition ist insbesondere eine Relativposition zu den nachfolgenden, nicht vom Manipulator 5 in ihrer Position veränderten Stückgütern 2. Da bei der hier beschriebenen Ausführungsform die Geschwindigkeit v6 der Horizontalfördereinrichtung 6 der Transportgeschwindigkeit v3 der Transporteinrichtung 3 entspricht und da die Transportrichtung TR der Transporteinrichtung 3 und der Horizontalfördereinrichtung 6 ebenfalls korrespondieren, werden die durch den Manipulator 5 in ihrer Position und/oder Ausrichtung veränderten Stückgüter 2* bei und/oder unmittelbar nach Erreichen ihrer Zielposition ohne Unterbrechung und/oder Geschwindigkeits- und/oder Richtungsänderung weitertransportiert.

Die hier nicht gezeigte und an dieser Stelle nicht näher ausgeführte Weiterbewegung der positionierten Stückgüter 2* mittels der Horizontalfördereinrichtung 6 kann insbesondere einen Weitertransport in Transportrichtung TR zu hier nicht gezeigten nachgeordneten Palettierungs- und/oder Verpackungsstationen bedeuten, wo die gebildeten Stückgutlagen bspw. gestapelt, verpackt, palettiert oder auf andere Weise weiterbehandelt werden.

Die Aufnahmeposition des Manipulators 5 kann entsprechend der Anzahl der abzugreifenden und/oder von der Gruppe 1a abzuteilenden Stückgüter 2* verschoben und/oder der Manipulator 5 entsprechend der Positionen der zu erfassenden Stückgüter 2* aktiviert werden. Die auf der zu bildenden Lage benötigten Produktgruppen werden somit während des Manipulationsschritts, der in vorteilhafter Weise einen Gruppierprozess und einen Positionierprozess in einem einzigen Verfahrensschritt vereint, gebildet.

Bei dem dargestellten Ausführungsbeispiel werden drei Stückgüter 2 der Gruppe 1a durch den Manipulator 5 erfasst und in eine Zielposition überführt, wobei die erfasste Gruppe aus den drei erfassten Stückgütern 2 zusätzlich gedreht wird. Für den Fachmann wird aus dieser Beschreibung klar, dass je nach Ausbildung des Manipulators 5 und Anordnung des Manipulators 5 an der einlaufenden geschlossenen Formation F auch in zeitlich verschiedenen Verfahrensschritten jeweils unterschiedliche Mengen an Stückgütern 2, 2* erfasst werden können.

Die Transportgeschwindigkeit v3 der Transporteinrichtung 3 bzw. die Geschwindigkeit v6 der Horizontalfördereinrichtung 6 ist dabei so gewählt, dass der Manipulator 5 innerhalb des ihm zur Verfügung stehenden Arbeitsbereichs bzw. Erfassungsbereichs 4 ausreichend Zeit hat, um die Stückgüter 2* zu verschieben und/oder zu positionieren. Als besonders vorteilhafte Ausführungsvariante für den Manipulator 5 haben sich daher Deltakinematik- Roboter oder Parallelkinematik-Roboter herausgestellt, die in der Lage sind, die gewünschten hoch dynamischen Verschiebebewegungen der wenigstens zwei zeitlich aufeinanderfolgenden Schritte zu realisieren und möglichst schnelle Taktzeiten zu ermöglichen.

Vor dem Einleiten einer Drehung des Manipulators 5 kann dieser beispielsweise zusammen mit den erfassten Stückgütern 2* zumindest kurzfristig gegenüber den Stückgütern 2 der Gruppe 1a beschleunigt werden, um die vom Manipulator 5 erfassten Stückgüter 2* zumindest geringfügig von den nachfolgenden Stückgütern 2 der Gruppe 1a abzutrennen und um auf diese Weise Kollisionen mit den weitertransportierten Stückgütern 2 der Gruppe 1a zuverlässig zu verhindern.

Bei dem hier beschriebenen Verfahren werden die Gruppen an Stückgütern 2* gemäß der jeweils zu bildenden Anordnung während des Gruppier- und/oder Positionierprozesses zusammengestellt bzw. gebildet. Insbesondere ist die Gruppenbildung und Positionierung im Rahmen eines einzigen Verfahrensschrittes und vermittels einer einzigen entsprechenden Vorrichtung (insbesondere der beweg-, verschieb- und/oder rotierbare Manipulator 5 als Teil der Vorrichtung) möglich. Dies stellt einen bedeutsamen Unterschied zum bekannten Stand der Technik dar, bei dem beispielsweise durch die Anordnung geeigneter Fördermittel, die mit jeweils unterschiedlichen Geschwindigkeiten angetrieben werden, erst eine Gruppenbildung erfolgt, die anschließend in einem weiteren Verfahrensschritt entsprechend der zu bildenden Lage positioniert und/oder gedreht werden.

Wenn im vorliegenden Fall bzw. generell im Zusammenhang der vorliegenden Erfindung und/oder im Zusammenhang mit den hier anhand der Figuren 1 bis 5 beschriebenen Ausführungsbeispiele generalisierend von einem Manipulator 5 die Rede ist, kann es sich konkret bei dem zur Überführung des mindestens einen Stückgutes 2, 2* in die Zielposition und/oder Zielausrichtung vorgesehenen Teil des Manipulators 5 beispielsweise um einen Werkzeugkopf, einen Greiferkopf o.dgl. handeln, der bspw. an beweglich gelagerten Auslegerarmen (z.B. des erwähnten Deltakinematik-Roboters) gehaltert und gelagert ist, welche Auslegerarme wiederum typischerweise an einem Gestell oder Rahmen o. dgl. gestellfest gelagert sein können. Eine solche - auch als Parallelkinematik-Anordnung bekannte - Manipulatoraufhängung bzw. Manipulatoranordnung ermöglicht die gewünschte Beweglichkeit des Kopfes (auch: des Manipulators 5), der die Stückgüter 2, 2* in der gewünschten Weise erfassen, verschieben, positionieren, platzieren, drehen etc. kann, um die jeweiligen Zielpositionen und/oder Zielausrichtungen für die Stückgüter 2, 2* anfahren zu können. Ebenso denkbar sind jedoch auch andere geeignete Manipulatorkonfigurationen, bspw. solche mit Portalroboter-Führungen oder ähnlichem. Diese anderen Manipulatorkonfigurationen können sich wahlweise auf einzelne, mehrere oder alle Ausführungsvarianten beziehen, die im Zusammenhang der vorliegenden Figurenbeschreibung und/oder der gesamten Erfindungsbeschreibung erwähnt sind.

Bei der hier beschriebenen Ausführungsvariante des erfindungsgemäßen Verfahrens wird weiterhin die zwischen der Gruppe 1a mit einer definierten Anzahl an Stückgütern 2 und der nachlaufenden Reihe 1 bzw. Formation F mit einer im Wesentlichen unendlichen Anzahl von Stückgütern 2 erzeugte Lücke 30 zusätzlich sensorisch erfasst. Hierzu ist ein Detektionsmittel 15 vorgesehen, das dafür ausgestattet ist, bestimmte Parameter des ersten Stückgutes 2 der nachlaufenden Reihe 1 bzw. Formation F zu erfassen. Das Detektionsmittel 15 kann beispielsweise durch eine Lichtschranke 16 gebildet sein, die beispielsweise die Vorderkante 40 des ersten Stückgutes 2 der nachlaufenden Reihe 1 erfasst. Insbesondere kann eine Lichtschranke 16 einen in etwa quer zur Transportrichtung TR verlaufenden Sensorlichtstrahl erzeugen, der mittels eines geeigneten Empfängers erfasst wird. Beim Eintritt der ersten Stückgutes 2 der nachlaufenden Reihe 1 wird der Lichtstrahl durch die Vorderkante 40 des ersten Stückgutes 2 unterbrochen. Dadurch wird ein Signal erzeugt und die entsprechende Information an die Steuerungseinrichtung 12 übermittelt. Auf diese Weise werden aus den durch das Detektionsmittel 15 ermittelten Daten wichtige Raumkoordinaten und/oder Positionswerte für das jeweils zuvorderst befindliche Stückgut 2 ermittelt, die für die exakte Ansteuerung des Manipulators 5 und insbesondere für dessen zyklische Kalibrierung nach einer bestimmten Anzahl an Manipulationsschritten notwendig sind.

Das Detektionsmittel 15 ist im dargestellten Ausführungsbeispiel im Bereich der ersten Transporteinrichtung 3 angeordnet. Es erfasst somit die Lücke 30 erst, nachdem diese vollständig ausgebildet ist. Während der Ausbildung der Lücke werden die auf der zweiten Transporteinrichtung 8 in Formation F nachlaufenden Stückgüter 2 kontinuierlich mit unveränderter Transportgeschwindigkeit v8 auf der Transporteinrichtung 8 bewegt.

Das Erfassen eines Stückgutparameters der nachlaufenden Reihe 1 dient der Kalibrierung des Manipulators 5. Das Detektionsmittel 15 erzeugt beim Erfassen eines entsprechenden Parameters der nachlaufenden Reihe 1 ein Signal, das an die Steuerungseinrichtung 12 der Handhabungsvorrichtung 10 übermittelt wird (vgl. Fig. 5). Anhand des vom Detektionsmittel 15 gelieferten Signals wird im Zusammenhang mit weiteren bekannten Prozessdaten, beispielsweise der Transportgeschwindigkeitv3 der Reihe 1 auf der Transporteinrichtung 3, der Geschwindigkeit v6 der innerhalb der Gruppe 1a einlaufenden Stückgüter 2 auf der Horizontalfördereinrichtung 6 usw., das Bewegungsprofil des Manipulators 5 zum Abgreifen der die nächste Palettenlage bildenden Stückgüter 2 der nachlaufenden Reihe 1 ermittelt und/oder beeinflusst. Insbesondere liefert das Detektionsmittel 15 somit jeweils einen Kalibrierungswert für jede, jeweils durch eine Lücke 30 von der über die Transporteinrichtung 8 einlaufenden Formation F bzw. Reihe 1 abzutrennende Gruppe 1a an Stückgüter 2, aus denen im Anschluss durch das Gruppiermodul 20 der Handhabungsvorrichtung 10 jeweils eine Palettierlage gebildet wird.

Sollten kleine Abstände zwischen den Stückgütern 2 der einlaufenden Formation F bzw. zwischen den Stückgütern 2 innerhalb der abgetrennten Gruppe 1a vorhanden sein, so wird durch die mit jeder neuen Lage erfolgende Korrektur insbesondere vermieden, dass sich diese ungewünschten Abstände zu einem derartigen Fehler aufsummieren könnten, der zu einem fehlerhaften Erfassen der durch den Manipulator 5 abzugreifenden Stückgüter 2 führen könnte.

Das hier beschriebene Verfahren ist mit einem geringen technischen Aufwand an Sensorik durchzuführen. Je zuführender Transportbahn, insbesondere je zuführender und Lücken 30 bildender Einheit aus erster und zweiter Transporteinrichtung 3, 8, ist nur ein Detektionsmittel15, beispielsweise eine Lichtschranke 16 notwendig, um den Manipulator 5 immer wieder für jede Palettenlage neu zu kalibrieren und somit kleinere Abweichungen innerhalb einer lückenlosen Gruppe 1a bzw. Reihe 1 zeitnah ausgleichen zu können.

Werden Stückgüter 2 in mehreren Reihen 1 parallel zugeführt (nicht dargestellt), so ist vorzugsweise für jede der Reihen 1 ein eigenes Detektionsmittel 15, beispielsweise eine eigene Lichtschranke 16, vorgesehen, dessen ermittelter Wert jeweils zur Kalibrierung des Manipulators 5 beim Handhaben der nachlaufenden Stückgüter 2 zum Erstellen der entsprechend Palettenlage herangezogen wird.

Gemäß einer alternativen, hier nicht dargestellten Ausführungsform der Erfindung kann die Lücke 30 zwischen der vorauseilenden Gruppe 1a mit einer definierten Anzahl an Stückgütern und der nachlaufenden Formation F auch durch eine Erhöhung der Transportgeschwindigkeit der Horizontalfördereinrichtung 6 gegenüber der Transporteinrichtung 3 erzeugt werden. In diesem Fall kann auf eine Transporteinrichtung 8vor der Transporteinrichtung 3 verzichtet werden.

Gemäß einer weiteren, ebenfalls nicht dargestellten Ausführungsform der Erfindung kann die Lücke auch erzeugt werden, indem Rückhaltemittel zumindest kurzzeitig zwischen entsprechende Stückgüter 2 der vorauseilenden Gruppe 1a und der nachlaufenden Reihe 1 eingreifen und die nachlaufenden Stückgüter kurzzeitig zurückhalten. Die Rückhaltemittel können beispielsweise von oben oder von der Seite her zwischen die Stückgüter 2 eingeschoben werden und somit eine Lücke 30 zwischen vorauseilenden Stückgütern 2 der Gruppe 1a, die somit eine definierte Anzahl an Stückgütern 2 aufweist, und den nachlaufenden Stückgütern 2 der Reihe 1 erzeugen. Alternativ kann vorgesehen sein, dass Rückhaltemittel von unten her durch das Förderband der Transporteinrichtung 3 oder 8 durchgreifen und nachlaufende Stückgüter 2 kurzzeitig zurückhalten, wobei aber die Funktionalität der Transporteinrichtung 3, 8 nicht gestört werden darf, so dass vorauseilende Stückgüter 2 weiterhin mit einer Transportgeschwindigkeit v3, v8 weiterbefördert werden.

Die Erfindung wurde unter Bezugnahme auf eine bevorzugte Ausführungsform anhand der Figuren 1 bis 5 beschrieben. Es ist jedoch für einen Fachmann keineswegs ausgeschlossen, dass weitere, hier nicht im Detail beschriebene Abwandlungen oder Änderungen der Erfindung vorgenommen werden können, ohne dass dadurch der Schutzbereich der nachstehenden Ansprüche verändert und/oder verlassen wird.

### Bezuaszeichenliste

- 1: Reihe
- 1a: Gruppe
- 2,2*: Stückgut
- 3: (erste) Transporteinrichtung
- 4: Erfassungsbereich
- 5: Manipulator
- 6: Horizontalfördereinrichtung
- 8: (zweite) Transporteinrichtung
- 10: Handhabungsvorrichtung
- 12: Steuerungseinrichtung
- 15: Detektionsmittel
- 16: Lichtschranke
- 20: Gruppiermodul
- 22: Klemmbacken
- 30: Lücke
- 40: Vorderkante

- F: Formation
- TB: Bewegungsbahn
- TR: Transportrichtung
- v3,v8: Transportgeschwindigkeit
- v3*: erhöhte Transportgeschwindigkeit
- v6: Geschwindigkeit, Fördergeschwindigkeit

## Patentansprüche

1. Verfahren zum Umgang mit in mindestens einer Reihe (1) hintereinander bewegten Stückgütern (2), die als geschlossene Formation (F) transportiert werden, **dadurch gekennzeichnet, dass**:
- in einem ersten Verfahrensschritt Lücken zwischen aufeinanderfolgenden Gruppen (1a) einer definierten Anzahl von Stückgütern (2) erzeugt werden, wobei die Gruppen (1a) jeweils eine definierte Anzahl von Stückgütern (2) aufweisen, welche Anzahl der Anzahl an Stückgütern (2) einer zu bildenden Vorgruppierung und/oder Lagenanordnung korrespondiert oder welche Anzahl einem Vielfachen der Anzahl an Stückgütern (2) einer zu bildenden Vorgruppierung und/oder Lagenanordnung korrespondiert,
- die Stückgüter (2) innerhalb der Gruppen lückenlos als geschlossene Formation transportiert werden;
- die Gruppen (1a) zu einem Erfassungsbereich (4) wenigstens eines Manipulators (5) transportiert werden,
- im Erfassungsbereich (4) in mehreren aufeinanderfolgenden Manipulationsschritten jeweils wenigstens ein transportiertes Stückgut (2) durch den wenigstens einen Manipulator (5) aus der geschlossenen Formation (F) der Gruppe (1a) klemmend und/oder kraft- und/oder formschlüssig erfasst, von nachfolgenden Stückgütern (2) der geschlossenen Formation (F) der Gruppe (1a) räumlich abgetrennt und in eine definierte relative Zielposition und/oder Zielausrichtung gegenüber den jeweils nachfolgenden Stückgütern (2) gebracht wird,
- mehrere Stückgüter der Gruppe (1a) durch jeweils aufeinanderfolgende Manipulationsschritte in jeweils unterschiedliche Zielpositionen und/oder Zielausrichtungen gebracht werden, wodurch jeweils Vorgruppierungen und/oder Lagenanordnungen für stapelbare Stückgutlagen mit jeweils einer definierten Anzahl von Stückgütern (2) ausgebildet werden.

2. Verfahren nach Anspruch 1, bei dem die Lagekoordinaten jeder Lücke (30) zwischen in Transportrichtung (TR) zum Erfassungsbereich (4) transportierten aufeinanderfolgenden Gruppen (1a) von Stückgütern (2) sensorisch erfasst und einer Steuer- und/oder Auswerteeinheit (12) als Positionswert zur Verfügung gestellt werden.

3. Verfahren nach Anspruch 1 oder 2, bei dem die Bewegungssteuerung des wenigstens einen Manipulators (5) im Erfassungsbereich (4) zur Erfassung des wenigstens einen Stückgutes (2) und zu seiner räumlichen Abtrennung von der der geschlossenen Formation (F) durch die Lücke (30) beabstandet vorauseilenden Gruppe (1a) an Stückgütern (2) auf Grundlage der von der Steuer- und/oder Auswerteeinheit (12) gelieferten Koordinaten- und/oder Positionswerte für das jeweils zuvorderst befindliche Stückgut (2) der Gruppe (1a) an Stückgütern (2) und/oder dessen sensorisch erfasster Vorderkante (40) erfolgt.

4. Verfahren nach Anspruch 2 oder 3, bei dem die Raumkoordinaten und/oder Positionen der in Transportrichtung (TR) jeweils zuvorderst befindlichen Stückgüter (2) der zum Erfassungsbereich (4) transportierten, der geschlossenen Formation (F) durch die Lücke (30) beabstandet vorauseilenden Gruppe (1a) an Stückgütern (2) und/oder die jeweiligen Raumkoordinaten und/oder Positionen der Vorderkanten (40) der zum Erfassungsbereich (4) transportierten Gruppe (1a) an Stückgütern (2) permanent und/oder in zyklischer Folge und/oder in unregelmäßiger Folge erfasst und der Steuer- und/oder Auswerteeinheit (12) als Positionswerte zur Verfügung gestellt werden.

5. Verfahren nach einem der Ansprüche 2 bis 4, bei dem die Bewegungssteuerungen des wenigstens einen Manipulators (5) bei der jeweiligen Erfassung wenigstens eines zuvorderst befindlichen Stückgutes (2) der der geschlossenen Formation (F) mit der Lücke (30) beabstandet vorauseilenden Gruppe (1a) an Stückgütern (2) im Erfassungsbereich (4) auf Grundlage der von der Steuer- und/oder Auswerteeinheit (12) gelieferten Koordinaten- und/oder Positionswerte für das jeweils zuvorderst befindliche Stückgut (2) der Gruppe (1a) und/oder dessen Vorderkante (40) kalibriert werden.

6. Verfahren nach einem der Ansprüche 2 bis 5, bei dem die Bewegungssteuerung des wenigstens einen Manipulators (5) bei oder nach jeder erneuten Bildung der Vorgruppierung und/oder Lagenanordnung auf Grundlage der von der Steuer- und/oder Auswerteeinheit (12) gelieferten Koordinaten- und/oder Positionswerte für das jeweils zuvorderst befindliche Stückgut (2) der von der geschlossenen Formation (F) distanzierten Gruppe (1a) an Stückgütern (2) und/oder dessen Vorderkante (40) kalibriert wird.

7. Verfahren nach einem der Ansprüche 1 bis 6, bei dem zumindest ein Abschnitt des Erfassungsbereiches (4) und/oder eines Bewegungsraumes des wenigstens einen Manipulators (5) mittels wenigstens einer Sensoreinrichtung zur Gewinnung von Raumkoordinaten und/oder Positions- und/oder Umrissdaten des wenigstens einen in Transportrichtung (TR) zuvorderst transportierten Stückgutes (2) der geschlossenen Formation (F) erfasst und überwacht wird.

8. Verfahren nach Anspruch 7, bei dem die Lagekoordinaten und/oder Positionen der Lücken zwischen aufeinanderfolgenden Gruppen (1a) an Stückgütern (2) und/oder zwischen einer von der geschlossenen Formation distanzierten Gruppe (1a) und der nachfolgenden geschlossenen Formation sensorisch erfasst werden, insbesondere mittels wenigstens einer optischen Sensoreinrichtung (16).

9. Verfahren nach Anspruch 8, bei dem die wenigstens eine optische Sensoreinrichtung (16) durch eine Lichtschranke mit einem in etwa quer zur Transportrichtung (TR) verlaufenden Sensorlichtstrahl gebildet ist, aus deren Daten die Steuer- und/oder Auswerteeinheit (12) Raumkoordinaten und/oder Positionswerte für das jeweils zuvorderst befindliche Stückgut (2) der geschlossenen Formation (F) und/oder dessen Vorderkante (40) gewinnt.

10. Verfahren nach Anspruch 8, bei dem die wenigstens eine Sensoreinrichtung (15) durch mindestens eine Kamera mit nachgeschalteter Bildauswertung gebildet ist, aus deren Daten die Steuer- und/oder Auswerteeinheit (12) Raumkoordinaten und/oder Positionswerte für das jeweils zuvorderst befindliche Stückgut (2) der geschlossenen Formation (F) und/oder dessen Vorderkante (40) gewinnt.

11. Vorrichtung (10) zur Durchführung eines Verfahrens zum Umgang mit in mindestens einer Reihe (1) hintereinander bewegten Stückgütern (2) gemäß einem der Ansprüche 1 bis 10, umfassend
- mindestens einen Manipulator (5) für Stückgüter (2),
- wenigstens eine Transporteinrichtung (3), über welche unmittelbar aufeinanderfolgende Stückgüter (2) der Reihe (1) annähernd ohne Beabstandung als geschlossene Formation (F) in Richtung eines Erfassungsbereiches (4) des mindestens einen Manipulators (5) transportierbar sind,
- wobei die wenigstens eine Transporteinrichtung (3) zur Ausbildung von Lücken zwischen Gruppen (1a) aufeinanderfolgender Stückgüter (2) und/oder zu deren Distanzierung von der nachfolgenden geschlossenen Formation (F) mit Stückgütern (2) mit variabler, insbesondere mit zumindest kurzzeitig gegenüber einer regulären Fördergeschwindigkeit beschleunigter Transportgeschwindigkeit (v3*) antreibbar ist,
- wobei die Stückgüter (2) innerhalb der Gruppen lückenlos als geschlossene Formation (F) transportiert werden,
- wobei der mindestens eine Manipulator (5) zum klemmenden und/oder kraft- und/oder formschlüssigen Entgegennehmen jeweils mindestens eines Stückgutes (2) aus der mittels der wenigstens einen Transporteinrichtung (3) in seinen Erfassungsbereich (4) transportierten und von der geschlossenen Formation (F) distanzierten Gruppe (1a) an Stückgütern (2) sowie zum räumlichen Abtrennen des mindestens einen Stückgutes (2) von nachfolgenden Stückgütern (2) der geschlossenen Formation (F) der Gruppe (1a)
und selektiven Überführen des wenigstens einen Stückgutes (2) in eine definierte Zielposition und/oder Zielausrichtung ausgebildet ist, wodurch jeweils Vorgruppierungen und/oder Lagenanordnungen für stapelbare Stückgutlagen mit jeweils einer definierten Anzahl von Stückgütern (2) ausgebildet werden können, wobei die definierte Anzahl von Stückgütern (2) jeder voneinander beabstandeten Gruppe (1a) mit der definierten Anzahl von Stückgütern (2) jeder zu bildenden Vorgruppierung und/oder Lagenanordnung korrespondiert.

12. Vorrichtung nach Anspruch 11, bei der dem Erfassungsbereich (4) und/oder der Transporteinrichtung (3) wenigstens eine Sensoreinrichtung (15) zur Erfassung von Lagekoordinaten jeder Lücke (30) zwischen in Transportrichtung (TR) zum Erfassungsbereich (4) transportierten aufeinanderfolgenden Gruppen (1a) von Stückgütern (2) und zur Generierung eines Positionswertes für eine Steuer- und/oder Auswerteeinheit (12) zugeordnet ist.

13. Vorrichtung nach Anspruch 11 oder 12, bei der eine Bewegungssteuerung des wenigstens einen Manipulators (5) im Erfassungsbereich (4) zur Erfassung des wenigstens einen Stückgutes (2) und zu seiner räumlichen Abtrennung von der der geschlossenen Formation (F) durch die Lücke (30) beabstandet vorauseilenden Gruppe (1a) an Stückgütern (2) mit von der Steuer- und/oder Auswerteeinheit (12) gelieferten Koordinaten- und/oder Positionswerten für das jeweils zuvorderst befindliche Stückgut (2) der Gruppe (1a) an Stückgütern (2) und/oder dessen sensorisch erfasster Vorderkante (40) gekoppelt ist.

14. Vorrichtung nach Anspruch 12 oder 13, bei der die Bewegungssteuerungen des wenigstens einen Manipulators (5) bei der jeweiligen Erfassung wenigstens eines zuvorderst befindlichen Stückgutes (2) der der geschlossenen Formation (F) mit der Lücke (30) beabstandet vorauseilenden Gruppe (1a) an Stückgütern (2) im Erfassungsbereich (4) auf Grundlage der von der Steuer- und/oder Auswerteeinheit (12) gelieferten Koordinaten- und/oder Positionswerte für das jeweils zuvorderst befindliche Stückgut (2) der Gruppe (1a) und/oder dessen Vorderkante (40) kalibrierbar sind.

15. Vorrichtung nach einem der Ansprüche 12 bis 14, bei der die Bewegungssteuerung des wenigstens einen Manipulators (5) bei oder nach jeder erneuten Bildung der Vorgruppierung und/oder Lagenanordnung auf Grundlage der von der Steuer- und/oder Auswerteeinheit (12) gelieferten Koordinaten- und/oder Positionswerte für das jeweils zuvorderst befindliche Stückgut (2) der von der geschlossenen Formation (F) distanzierten Gruppe (1a) an Stückgütern (2) und/oder dessen Vorderkante (40) kalibrierbar ist.

16. Vorrichtung nach einem der Ansprüche 12 bis 15, bei der die wenigstens eine optische Sensoreinrichtung (16) durch eine Lichtschranke mit einem in etwa quer zur Transportrichtung (TR) verlaufenden Sensorlichtstrahl gebildet ist, aus deren Daten die Steuer- und/oder Auswerteeinheit (12) Raumkoordinaten und/oder Positionswerte für das jeweils zuvorderst befindliche Stückgut (2) der geschlossenen Formation (F) und/oder dessen Vorderkante (40) gewinnt.

17. Vorrichtung nach einem der Ansprüche 12 bis 15, bei der die wenigstens eine optische Sensoreinrichtung (16) durch mindestens eine Kamera mit nachgeschalteter Bildauswertung gebildet ist, aus deren Daten die Steuer- und/oder Auswerteeinheit (12) Raumkoordinaten und/oder Positionswerte für das jeweils zuvorderst befindliche Stückgut (2) der geschlossenen Formation (F) und/oder dessen Vorderkante (40) gewinnt.

18. Vorrichtung nach einem der Ansprüche 11 bis 17, bei welcher der mindestens eine Manipulator (5) als Parallelkinematik-Roboter ausgebildet oder Teil eines solchen ist.

## Claims

1. A method used to handle piece goods (2) being moved one after another in at least one row (1) and being transported as closed formation (F), the method **characterised in that**
- spaces are generated in a first method step between successive groups (1a) of a defined number of piece goods (2), wherein the groups (1a) each have a defined number of piece goods (2), which number corresponds to the number of piece goods (2) of a pre-group and/or layer arrangement to be formed or which number corresponds to a multiple of the number of piece goods (2) of a pre-group and/or layer arrangement to be formed,
- the piece goods (2) are transported unspaced as closed formation within the groups;
- the groups (1a) are transported to a seizing range (4) of at least one manipulator (5),
- in each instance at least one transported piece good (2) is seized in the seizing range (4) in a plurality of consecutive manipulation steps in a clamping and/or force-locking and/or form-locking manner from the closed formation (F) of the group (1a) by the at least one manipulator (5), is spatially separated from subsequent piece goods (2) of the closed formation (F) of the group (1a), and is brought into a defined relative target position and/or target alignment in relation to the in each instance subsequent piece goods (2),
- a plurality of piece goods of the group (1a) are brought into in each instance different target positions and/or target alignments by in each instance consecutive manipulation steps, whereby in each instance pre-groups and/or layer arrangements for stackable piece good layers of an in each instance defined number of piece goods (2) are formed.

2. The method according to claim 1, in which the position coordinates of each space (30) between successive groups (1a) of piece goods (2) being transported in transport direction (TR) to the seizing range (4) are sensor-detected and provided as position value to a control unit and/or analysis unit (12).

3. The method according to claim 1 or 2, in which, for the purpose of seizing the at least one piece good (2) and for the purpose of the spatial separation thereof from the group (1a) of piece goods (2) preceding the closed formation (F) spaced apart by the space (30), the movement control of the at least one manipulator (5) in the seizing range (4) is carried out based on the coordinate values and/or position values provided by the control unit and/or analysis unit (12) for the in each instance foremost located piece good (2) of the group (1a) of piece goods (2) and/or for the sensor-detected front edge (40) thereof.

4. The method according to claim 2 or 3, in which the space coordinates and/or positions of the in each instance in transport direction (TR) foremost located piece goods (2) of the group (1a) of piece goods (2) being transported to the seizing range (4) preceding the closed formation (F) spaced apart by the space (30) and/or the particular space coordinates and/or positions of the front edges (40) of the group (1a) of piece goods (2) being transported to the seizing range (4) are detected permanently and/or in cyclic sequence and/or in irregular sequence and provided as position values to a control unit and/or analysis unit (12).

5. The method according to one of the claims 2 to 4, in which the movement controls of the at least one manipulator (5) are calibrated during the particular seizing of the at least one foremost located piece good (2) of the group (1a) of piece goods (2) in the seizing range (4) preceding the closed formation (F) spaced apart by the space (30) based on the coordinate values and/or position values provided by the control unit and/or analysis unit (12) for the in each instance foremost located piece good (2) of the group (1a) and/or for the front edge (40) thereof.

6. The method according to one of the claims 2 to 5, in which the movement control of the at least one manipulator (5) is calibrated during or after each new formation of the pre-group and/or layer arrangement based on the coordinate values and/or position values provided by the control unit and/or analysis unit (12) for the in each instance foremost located piece good (2) of the group (1a) of piece goods (2) and/or for the front edge (40) thereof, which group (1a) is distanced from the closed formation (F).

7. The method according to one of the claims 1 to 6, in which at least one section of the seizing range (4) and/or of a movement range of the at least one manipulator (5) is detected and monitored by means of at least one sensor device for the purpose of obtaining space coordinates and/or position data and/or contour data of the at least one piece good (2) of the closed formation (F), which piece good (2) is transported foremost in transport direction (TR).

8. The method according to claim 7, in which the position coordinates and/or positions of the spaces between successive groups (1a) of piece goods (2) and/or between a group (1a) distanced from the closed formation and the subsequent closed formation are sensor-detected, in particular by means of at least one optical sensor device (16).

9. The method according to claim 8, in which the at least one optical sensor device (16) is formed by a light barrier with a sensor light beam extending approximately transverse to the transport direction (TR), with the control unit and/or analysis unit (12) obtaining space coordinates and/or position values from the data of said sensor device (16) for the in each instance foremost located piece good (2) of the closed formation (F) and/or for the front edge (40) thereof.

10. The method according to claim 8, in which the at least one sensor device (15) is formed by at least one camera with downstream image evaluation, with the control unit and/or analysis unit (12) obtaining space coordinates and/or position values from the data of said sensor device (15) for the in each instance foremost located piece good (2) of the closed formation (F) and/or for the front edge (40) thereof.

11. An apparatus (10) used to carry out a method to handle piece goods (2) being moved one after another in at least one row (1) according to one of the claims 1 to 10, the apparatus (10) comprising
- at least one manipulator (5) for piece goods (2);
- at least one transport device (3) by way of which immediately successive piece goods (2) of the row (1) are transportable nearly without spaces as closed formation (F) toward a seizing range (4) of the at least one manipulator (5);
- wherein, for the purpose of the formation of spaces between groups (1a) of successive piece goods (2) and/or for the distancing thereof from the subsequent closed formation (F) of piece goods (2), the at least one transport device (3) is drivable at a transport speed (v3*) that is variable, in particular, at least briefly accelerated in relation to a regular conveying speed,
- wherein the piece goods (2) are transported unspaced as closed formation (F) within the groups;
- wherein the at least one manipulator (5) is designed to receive the in each instance at least one piece good (2) in a clamping and/or force-locking and/or form-locking manner from the group (1a) of piece goods (2) transported into the manipulator seizing range (4) by means of the at least one transport device (3) and distanced from the closed formation (F), as well for the spatial separation of the at least one piece good (2) from subsequent piece goods (2) of the closed formation (F) of the group (1a), and for selective transfer of the at least one piece good (2) into a defined target position and/or target alignment, whereby in each instance pre-groups and/or layer arrangements for stackable piece good layers of an in each instance defined number of piece goods (2) can be formed, wherein the defined number of piece goods (2) of each spaced-apart group (1a) corresponds to the defined number of piece goods (2) of each pre-group and/or layer arrangement to be formed.

12. The apparatus according to claim 11, in which at least one sensor device (15) is assigned to the seizing range (4) and/or to the transport device (3) for the purpose of the detection of position coordinates of each space (30) between successive groups (1a) of piece goods (2) being transported in transport direction (TR) to the seizing range (4) and for the purpose of generating a position value for a control unit and/or analysis unit (12).

13. The apparatus according to claim 11 or 12, in which, for the purpose of seizing the at least one piece good (2) and for the purpose of the spatial separation thereof from the group (1a) of piece goods (2) preceding the closed formation (F) spaced apart by the space (30), the movement control of the at least one manipulator (5) in the seizing range (4) is coupled with the coordinate values and/or position values provided by the control unit and/or analysis unit (12) for the in each instance foremost located piece good (2) of the group (1a) of piece goods (2) and/or for the sensor-detected front edge (40) thereof.

14. The apparatus according to claim 12 or 13, in which the movement controls of the at least one manipulator (5) are calibratable during the particular seizing of the at least one foremost located piece good (2) of the group (1a) of piece goods (2) in the seizing range (4) preceding the closed formation (F) spaced apart by the space (30) based on the coordinate values and/or position values provided by the control unit and/or analysis unit (12) for the in each instance foremost located piece good (2) of the group (1a) and/or for the front edge (40) thereof.

15. The apparatus according to one of the claims 12 to 14, in which the movement control of the at least one manipulator (5) is calibratable during or after each new formation of the pre-group and/or layer arrangement based on the coordinate values and/or position values provided by the control unit and/or analysis unit (12) for the in each instance foremost located piece good (2) of the group (1a) of piece goods (2) and/or for the front edge (40) thereof, which group (1a) is distanced from the closed formation (F).

16. The apparatus according to one of the claims 12 to 15, in which the at least one optical sensor device (16) is formed by a light barrier with a sensor light beam extending approximately transverse to the transport direction (TR), with the control unit and/or analysis unit (12) obtaining space coordinates and/or position values from the data of said sensor device (16) for the in each instance foremost located piece good (2) of the closed formation (F) and/or for the front edge (40) thereof.

17. The apparatus according to one of the claims 12 to 15, in which the at least one optical sensor device (16) is formed by at least one camera with downstream image evaluation, with the control unit and/or analysis unit (12) obtaining space coordinates and/or position values from the data of said sensor device (16) for the in each instance foremost located piece good (2) of the closed formation (F) and/or for the front edge (40) thereof.

18. The apparatus according to one of the claims 11 to 17, in which the at least one manipulator (5) is designed as parallel kinematic robot or as a part thereof.

## Revendications

1. Procédé de manipulation de produits de détail (2) qui sont déplacés les uns derrière les autres en au moins une rangée (1) et qui sont transportés en tant que formation fermée (F), **caractérisé par le fait que**
- dans une première étape de procédé, des intervalles sont générés entre des groupes (1a) successifs d'un nombre défini de produits de détail (2), dans lequel les groupes (1a) comprennent chacun un nombre défini de produits de détail (2), lequel nombre correspond au nombre de produits de détail (2) d'un pré-groupement et/ou d'un agencement de couches à former ou lequel nombre correspond à un multiple du nombre de produits de détail (2) d'un pré-groupement et/ou d'un agencement de couches à former,
- les produits de détail (2) sont transportées sans intervalles en tant que formation fermée à l'intérieur des groupes;
- les groupes (1a) sont transportés vers une zone de saisie (4) d'au moins un manipulateur (5),
- dans la zone de saisie (4), dans plusieurs étapes de manipulation successives, respectivement au moins un produit de détail (2) transporté est saisi par serrage et/ou par adhérence et/ou à engagement positif dans la formation fermée (F) du groupe (1a) par ledit au moins un manipulateur (5), est séparé spatialement de produits de détail (2) suivants de la formation fermée (F) du groupe (1a) et est amené dans une position cible et/ou orientation cible relative(s) définie(s) par rapport aux produits de détail (2) respectivement suivants,
- plusieurs produits de détail du groupe (1a) sont amenés, par des étapes de manipulation respectivement successives, dans des positions cibles et/ou orientations cibles respectivement différentes ce par quoi des pré-groupements et/ou agencements de couches pour des couches empilables de produits de détail comprenant chacune un nombre défini de produits de détail (2) sont formés respectivement.

2. Procédé selon la revendication 1, dans lequel les coordonnées de position de chaque intervalle (30) entre des groupes (1a) successifs de produits de détail (2), qui sont transportés dans la direction de transport (TR) vers la zone de saisie (4) sont détectées par capteur et sont mises à la disposition d'une unité de commande et/ou d'évaluation (12) en tant que valeur de position.

3. Procédé selon la revendication 1 ou 2, dans lequel la commande de déplacement dudit au moins un manipulateur (5) dans la zone de saisie (4) pour saisir ledit au moins un produit de détail (2) et pour séparer celui-ci spatialement du groupe (1a) de produits de détail (2) situé en amont de la formation fermée (F) en étant espacé par l'intervalle (30) de celle-ci se fait sur la base des valeurs de coordonnées et/ou de position fournies par l'unité de commande et/ou d'évaluation (12), pour le produit de détail (2) du groupe (1a) de produits de détail (2), qui est situé respectivement en premier, et/ou de son bord avant (40) détecté par capteur.

4. Procédé selon la revendication 2 ou 3, dans lequel les coordonnées spatiales et/ou les positions des produits de détail (2) situés respectivement en premier dans la direction de transport (TR), du groupe (1a) de produits de détail (2) qui est transporté vers la zone de saisie (4) et situé en amont de la formation fermée (F) en étant espacé par l'intervalle (30) de celle-ci, et/ou les coordonnées spatiales et/ou les positions des bords avant (40) du groupe (1a) de produits de détail (2) transporté vers la zone de saisie (4) sont détectées en permanence et/ou selon une séquence cyclique et/ou dans un ordre irrégulier et sont mises à la disposition de l'unité de commande et/ou d'évaluation (12) en tant que valeurs de position.

5. Procédé selon l'une quelconque des revendications 2 à 4, dans lequel les commandes de déplacement dudit au moins un manipulateur (5) lors de la saisie respective, dans la zone de saisie (4), d'au moins un produit de détail (2) situé en premier du groupe (1a) de produits de détail (2), qui est situé en amont de la formation fermée (F) en étant espacé par l'intervalle (30) de celle-ci, sont calibrées sur la base des valeurs de coordonnées et/ou de position fournies par l'unité de commande et/ou d'évaluation (12), pour le produit de détail (2) du groupe (1a), qui est situé respectivement en premier, et/ou de son bord avant (40).

6. Procédé selon l'une quelconque des revendications 2 à 5, dans lequel la commande de déplacement dudit au moins un manipulateur (5) lors de ou après chaque nouvelle formation du pré-groupement et/ou de l'agencement de couches est calibrée sur la base des valeurs de coordonnées et/ou de position fournies par l'unité de commande et/ou d'évaluation (12), pour le produit de détail (2) situé respectivement en premier du groupe (1a) de produits de détail (2), espacé de la formation fermée (F), et/ou de son bord avant (40).

7. Procédé selon l'une quelconque des revendications 1 à 6, dans lequel au moins une section de la zone de saisie (4) et/ou d'un espace de mouvement dudit au moins un manipulateur (5) est détecté(e) et surveillé(e) au moyen d'au moins un dispositif capteur afin d'obtenir des coordonnées spatiales et/ou des données de position et/ou de contour dudit au moins un produit de détail (2) de la formation fermée (F), qui est transporté en premier dans la direction de transport (TR).

8. Procédé selon la revendication 7, dans lequel les coordonnées de position et/ou les positions des intervalles entre des groupes (1a) successifs de produits de détail (2) et/ou entre un groupe (1a) espacé de la formation fermée et la formation fermée suivante sont détectées par capteur, en particulier au moyen d'au moins un dispositif capteur optique (16).

9. Procédé selon la revendication 8, dans lequel ledit au moins un dispositif capteur optique (16) est formé par un barrage photoélectrique qui présente un faisceau lumineux de capteur s'étendant à peu près transversalement à la direction de transport (TR) et à partir des données duquel l'unité de commande et/ou d'évaluation (12) acquiert des coordonnées spatiales et/ou des valeurs de position pour le produit de détail (2) de la formation fermée (F), situé respectivement en premier, et/ou de son bord avant (40).

10. Procédé selon la revendication 8, dans lequel ledit au moins un dispositif capteur (15) est formé par au moins une caméra avec une évaluation d'image en aval à partir des données de laquelle l'unité de commande et/ou d'évaluation (12) acquiert des coordonnées spatiales et/ou des valeurs de position pour le produit de détail (2) de la formation fermée (F), qui se trouve respectivement en premier, et/ou de son bord avant (40).

11. Dispositif (10) de mise en oeuvre d'un procédé de manipulation de produits de détail (2) déplacés les uns derrière les autres en au moins une rangée (1), selon l'une quelconque des revendications 1 à 10, comprenant
- au moins un manipulateur (5) pour les produits de détail (2),
- au moins un dispositif de transport (3) par l'intermédiaire duquel des produits de détail (2) immédiatement successifs de la rangée (1) peuvent être transportés approximativement sans espacement, en tant que formation fermée (F), en direction d'une zone de saisie (4) dudit au moins un manipulateur (5),
- dans lequel, pour former des intervalles entre des groupes (1a) de produits de détail (2) successifs et/ou pour espacer ceux-ci de la formation fermée (F) suivante comprenant des produits de détail (2), ledit au moins un dispositif de transport (3) peut être entraîné à une vitesse de transport (v3*) variable, en particulier accélérée au moins pour une courte durée par rapport à une vitesse de transport régulière,
- dans lequel les produits de détail sont transportés sans intervalles en tant que formation fermée (F) à l'intérieur des groupes,
- dans lequel ledit au moins un manipulateur (5) est conçu pour recevoir par serrage et/ou par adhérence et/ou à engagement positif respectivement au moins un produit de détail (2) du groupe (1a) de produits de détail (2) transporté dans sa zone de saisie (4) au moyen dudit au moins un dispositif de transport (3) et espacé de la formation fermée (F) ainsi que pour séparer spatialement ledit au moins un produit de détail (2) de produits de détail (2) suivants de la formation fermée (F) du groupe (1a) et pour transférer de manière sélective ledit au moins un produit de détail (2) dans une position cible et/ou orientation cible définie(s), ce qui permet de former respectivement des pré-groupements et/ou agencements de couches pour des couches empilables de produits de détail ayant chacune un nombre défini de produits de détail (2), dans lequel le nombre défini de produits de détail (2) de chaque groupe (1a) espacé correspond au nombre défini de produits de détail (2) de chaque pré-groupement et/ou agencement de couches à former.

12. Dispositif selon la revendication 11, dans lequel au moins un dispositif capteur (15) destiné à détecter des coordonnées de position de chaque intervalle (30) entre des groupes (1a) successifs de produits de détail (2), qui sont transportés dans la direction de transport (TR) vers la zone de saisie (4), et à générer une valeur de position pour une unité de commande et/ou d'évaluation (12) est associé à la zone de saisie (4) et/ou au dispositif de transport (3).

13. Dispositif selon la revendication 11 ou 12, dans lequel la commande de déplacement dudit au moins un manipulateur (5) dans la zone de saisie (4) pour saisir ledit au moins un produit de détail (2) et pour séparer celui-ci spatialement du groupe (1a) de produits de détail (2) situé en amont de la formation fermée (F) en étant espacé par l'intervalle (30) de celle-ci est liée à des valeurs de coordonnées et/ou de position fournies par l'unité de commande et/ou d'évaluation (12), pour le produit de détail (2) du groupe (1a) de produits de détail (2), qui est situé respectivement en premier, et/ou de son bord avant (40) détecté par capteur.

14. Dispositif selon la revendication 12 ou 13, dans lequel les commandes de déplacement dudit au moins un manipulateur (5) lors de la saisie respective, dans la zone de saisie (4), d'au moins un produit de détail (2) situé en premier du groupe (1a) de produits de détail (2), qui est situé en amont de la formation fermée (F) en étant espacé par l'intervalle (30) de celle-ci, peuvent être calibrées sur la base des valeurs de coordonnées et/ou de position fournies par l'unité de commande et/ou d'évaluation (12), pour le produit de détail (2) du groupe (1a), qui est situé respectivement en premier, et/ou de son bord avant (40).

15. Dispositif selon l'une quelconque des revendications 12 à 14, dans lequel la commande de déplacement dudit au moins un manipulateur (5) lors de ou après chaque nouvelle formation du pré-groupement et/ou de l'agencement de couches peut être calibrée sur la base des valeurs de coordonnées et/ou de position fournies par l'unité de commande et/ou d'évaluation (12), pour le produit de détail (2) situé respectivement en premier du groupe (1a) de produits de détail (2), espacé de la formation fermée (F), et/ou de son bord avant (40).

16. Dispositif selon l'une quelconque des revendications 12 à 15, dans lequel ledit au moins un dispositif capteur optique (16) est formé par un barrage photoélectrique qui présente un faisceau lumineux de capteur s'étendant à peu près transversalement à la direction de transport (TR) et à partir des données duquel l'unité de commande et/ou d'évaluation (12) acquiert des coordonnées d'espace et/ou des valeurs de position pour le produit de détail (2) de la formation fermée (F), situé respectivement en premier, et/ou de son bord avant (40).

17. Dispositif selon l'une quelconque des revendications 12 à 15, dans lequel ledit au moins un dispositif capteur optique (16) est formé par au moins une caméra avec une évaluation d'image en aval à partir des données de laquelle l'unité de commande et/ou d'évaluation (12) acquiert des coordonnées spatiales et/ou des valeurs de position pour le produit de détail (2) de la formation fermée (F), qui est situé respectivement en premier, et/ou de son bord avant (40).

18. Dispositif selon l'une quelconque des revendications 11 à 17, dans lequel ledit au moins un manipulateur (5) est conçu en tant que robot à cinématique parallèle (42) ou fait partie d'un tel robot à cinématique parallèle.
